# EUROPÄISCHE PATENTANMELDUNG

(11) **EP 2 357 463 A1**
(43) Veröffentlichungstag der Anmeldung: **17.08.2011**
(21) Anmeldenummer: 10153763.7
(22) Anmeldetag: 17.02.2010
(51) Int. Cl.: G01N 9/08

(54) **Lastaufnahmevorrichtung zur Dichtebestimmung**

(71) Anmelder: Mettler-Toledo AG, 8606 Greifensee (CH)
(72) Erfinder: Rotach, Hansjörg, 8307, Effretikon (CH); Buchmann, Alice, 8340, Hinwil (CH)

(57) **Zusammenfassung**

Die erfindungsgemässe Lastaufnahmevorrichtung (100) für die Aufnahme von mindestens einem Festkörper (900), der während einer Dichtebestimmung in einem umgebenden Fluid (1000) gehalten werden kann, weist ein Hängemodul (200) zur hängenden Verbindung mit einem mit der Wägezelle einer Waage (600) verbundenen Teil (700) und ein mit dem Hängemodul (200) verbundenen Aufnahmemodul (300) zur Aufnahme des Festkörpers (900) auf. Ausserdem weist das Aufnahmemodul (300) eine Vertiefung (310) zur Aufnahme des Festkörpers (900) auf und die Ausrichtung dieser Vertiefung (310) ist derart einstellbar, dass in einer ersten Betriebsposition des Aufnahmemoduls (300) ein in dem Fluid (1000) sinkender Festkörper (900) durch die auf ihn wirkende Schwerkraft in der Vertiefung(31 0) aufliegen kann und in einer zweiten Betriebsposition ein in dem Fluid (1000) schwimmender Festkörper (900) durch die auf ihn wirkende Auftriebskraft mittels der Vertiefung (310) in dem umgebenden Fluid (1000) gehalten werden kann.

## Beschreibung

Die vorliegende Erfindung betrifft Lastaufnahmevorrichtungen für die Aufnahme von mindestens einem Festkörper, der während einer Dichtebestimmung in einem umgebenden Fluid gehalten werden kann, wobei die Lastaufnahmevorrichtung ein Hängemodul zur hängenden Verbindung mit einem mit der Wägezelle einer Waage verbundenen Teil und ein mit dem Hängemodul verbundenen Aufnahmemodul zur Aufnahme des Festkörpers aufweist.

Diese Lastaufnahmevorrichtungen werden vor allem für die Bestimmung der Dichte von Festkörpern verwendet. Während der Dichtebestimmung wird der Festkörper in einem umgebenden Fluid gehalten. Das Fluid befindet sich während der Dichtebestimmung in einem Gefäss, das von der Wägezelle der Waage entkoppelt ist. Die Dichtebestimmung kann sowohl mit schwimmenden, als auch mit sinkenden Festkörpern durchgeführt werden. Bei schwimmenden Festkörpern ist die Dichte des Festkörpers kleiner als die Dichte des umgebenden Fluids. Bei sinkenden Festkörpern ist die Dichte des Festkörpers grösser als die Dichte des umgebenden Fluids. Um die Festkörper in dem umgebenden Fluid zu halten wird eine Lastaufnahmevorrichtung benötigt.

Aus dem Stand der Technik ist eine Lastaufnahmevorrichtung für sinkende Festkörper bekannt. Diese Lastaufnahmevorrichtung weist ein Aufnahmemodul mit einer Vertiefung auf. Die Vertiefung ist in Richtung der Schwerkraft ausgerichtet. Ein sinkender Festkörper kann in dieser Vertiefung aufliegen und wird dadurch im Fluid gehalten. Für die Dichtebestimmung von schwimmenden Festkörpern ist dieses Aufnahmemodul nicht geeignet, da der schwimmende Festkörper zur Oberfläche des Fluids schwimmt. Aus diesem Grund wird für die Dichtebestimmung von schwimmenden Festkörpern eine weitere Lastaufnahmevorrichtung benötigt. Diese bekannte Lastaufnahmevorrichtung weist ein Aufnahmemodul mit einer Vertiefung auf, wobei die Vertiefung entgegen der Richtung der Schwerkraft ausgerichtet ist. Der schwimmende Festkörper wird unter dem Aufnahmemodul platziert. Durch die auf den schwimmenden Festkörper wirkende Auftriebskraft wird der Festkörper von unten gegen diese Vertiefung gedrückt und im Fluid gehalten.

Diese bekannten Lastaufnahmevorrichtungen haben den Nachteil, dass für die Dichtebestimmung von schwimmenden und sinkenden Festkörpern unterschiedliche Lastaufnahmevorrichtungen benötigt werden.

Dieser Nachteil wird von der in US 6 561 025 B2 offenbarten Lastaufnahmevorrichtung beseitigt. Diese Lastaufnahmevorrichtung weist ein starres ebenes Netz auf, welches während der Dichtebestimmung senkrecht zur Schwerkraft ausgerichtet ist. Für die Dichtebestimmung eines sinkenden Festkörpers wird der Festkörper auf das Netz gelegt. Anschliessend wird die Lastaufnahmevorrichtung mit dem Netz und dem sich darauf befindenden Festkörpers in das Fluid eingetaucht. Durch die auf den Festkörper wirkende Schwerkraft wird der Festkörper auf das Netz gedrückt und so im umgebenden Fluid gehalten. Für die Dichtebestimmung eines schwimmenden Festkörpers wird der Festkörper ebenfalls auf das Netz gelegt. Um den Festkörper am Auftreiben zu der Oberfläche des Fluids zu hindern, wird über den Festkörper ein Auftriebsverhinderer gelegt. Der Auftriebsverhinderer ist derart gestaltet, dass er zusammen mit dem Netz einen Hohlraum bildet, in dem der Festkörper während der Dichtebestimmung gehalten wird. Für die Dichtebestimmung des schwimmenden Festkörpers, wird die Lastaufnahmevorrichtung und der zwischen Netz und Auftriebsverhinderer sich befindende Festkörper in das Fluid eingetaucht. Dabei wird der Festkörper auf Grund der auf ihn wirkenden Auftriebskraft gegen den Auftriebsverhinderer gedrückt und im Fluid gehalten. Die auf den Auftriebsverhinderer wirkende Schwerkraft muss grösser als die auf den Festkörper wirkende Auftriebskraft sein. Nachteilig bei dieser Lastaufnahmevorrichtung ist, dass für die Dichtebestimmung von schwimmenden Festkörpern ein zusätzliches Teil, namentlich der Auftriebsverhinderer, notwendig ist.

Dieser Nachteil wird in der in US 7 296 466 B2 offenbarten Lastaufnahmevorrichtung umgangen. Die dort offenbarte Lastaufnahmevorrichtung weist eine Metallröhre mit zwei Enden und einer ebenen Bodenplatte auf. Während der Dichtebestimmung ist die Achse der Röhre in Schwerkraftrichtung ausgerichtet. Die Bodenplatte befindet sich in der Röhre und ist in Schwerkraftrichtung beweglich gelagert. Bei der Dichtebestimmung von sinkenden Festkörpern wird der Festkörper auf die Bodenplatte gelegt. Durch die auf den Festkörper wirkende Schwerkraft wird die Bodenplatte nach unten gedrückt. Ein erster Stopper verhindert das Herausrutschen der Bodenplatte aus dem unteren Ende der Röhre. Bei der Dichtebestimmung von schwimmenden Festkörpern wird der Festkörper unter der Bodenplatte platziert. Durch die während der Dichtebestimmung auf den Festkörper wirkende Auftriebskraft wird die Bodenplatte nach oben gedrückt. Ein zweiter Stopper verhindert das Herausrutschen der Bodenplatte aus dem oberen Ende der Röhre. Für die Dichtebestimmung von schwimmenden Festkörpern muss die auf den Festkörper wirkende Auftriebskraft gross genug sein um die Bodenplatte nach oben zu drücken. Weist der Festkörper eine dem Fluid ähnliche Dichte auf, tritt das Problem auf, dass der Festkörper nicht zuverlässig im Fluid gehalten werden kann.

Aufgabe der Erfindung ist es deshalb eine Lastaufnahmevorrichtung zur Verfügung zu stellen, die für die Dichtebestimmung von jeder Art von Dichten des Festkörpers zuverlässig verwendet werden kann. Insbesondere sollte die Lastaufnahmevorrichtung für Festkörper mit einer der umgebenden Flüssigkeit ähnlichen Dichte verwendet werden können.

Diese Aufgabe wird durch eine Lastaufnahmevorrichtung gelöst, welche die im unabhängigen Patentanspruch angegebenen Merkmale aufweist. Weitere vorteilhafte Ausführungsformen können den abhängigen Ansprüchen entnommen werden.

Die erfindungsgemässe Lastaufnahmevorrichtung für die Aufnahme von mindestens einem Festkörper, der während einer Dichtebestimmung in einem umgebenden Fluid gehalten werden kann, weist ein Hängemodul zur hängenden Verbindung mit einem mit der Wägezelle einer Waage verbundenen Teil und ein mit dem Hängemodul verbundenen Aufnahmemodul zur Aufnahme des Festkörpers auf. Ausserdem weist das Aufnahmemodul eine Vertiefung zur Aufnahme des Festkörpers auf und die Ausrichtung dieser Vertiefung ist derart einstellbar, dass in einer ersten Betriebsposition des Aufnahmemoduls ein in dem Fluid sinkender Festkörper durch die auf ihn wirkende Schwerkraft in der Vertiefung aufliegen kann und in einer zweiten Betriebsposition ein in dem Fluid schwimmender Festkörper durch die auf ihn wirkende Auftriebskraft mittels der Vertiefung in dem umgebenden Fluid gehalten werden kann. Die erfindungsgemässe Lastaufnahmevorrichtung hat den Vorteil, dass durch die Schwerkraft bzw. Auftriebskraft keine Teile der Lastaufnahmevorrichtung bewegt werden müssen. Somit ist die Lastaufnahmevorrichtung auch verwendbar wenn eine kleine Schwerkraft bzw. Auftriebskraft auf den Festkörper wirken. Vorteilhaft ist auch, dass für die Dichtebestimmung von schwimmenden Festkörpern keine zusätzlichen Teile, wie z. B. ein Auftriebsverhinderer, benötigt werden.

In einer möglichen Ausführungsform ist das Aufnahmemodul drehbar um eine senkrecht zur Schwerkraftrichtung ausgerichtete Drehachse gelagert. Durch Rotation des Aufnahmemoduls um diese Drehachse kann zwischen der ersten und zweiten Betriebsposition gewechselt werden. Die Rotation erfolgt dabei um ca. 180°. In der ersten Betriebsposition ist während der Dichtebestimmung die Vertiefung in Richtung der Schwerkraft ausgerichtet. In der zweiten Betriebsposition ist die Vertiefung während der Dichtebestimmung in Richtung der Auftriebskraft ausgerichtet.

Die Drehachse kann durch das Aufnahmemodul oder den Rand des Aufnahmemoduls verlaufen. Das Aufnahmemodul ist besonders stabil wenn die Drehachse durch zwei diametral zueinander stehende Randpunkte des Aufnahmemoduls verläuft.

In einer möglichen Ausführungsform weist die Lastaufnahmevorrichtung ein Höhenverstellelement auf, mit dem die Eindringtiefe des Aufnahmemoduls in das umgebende Fluid variiert werden kann. Idealerweise wird die Eindringtiefe so gewählt, dass bei der ersten Betriebsposition oberhalb des Aufnahmemoduls im Fluid genügend Raum für den sinkenden Festkörper vorhanden ist und bei der zweiten Betriebsposition im Fluid unterhalb des Aufnahmemoduls genügend Raum für den schwimmenden Festkörper vorhanden ist. Für die Dichtebestimmung des schwimmenden Festkörpers wird vorteilhafterweise eine geringere Eindringtiefe gewählt als für sinkende Festkörper.

Das Höhenverstellelement ist idealerweise ein Teil des Hängemoduls. Alternativ kann das Höhenverstellelement auch ein Teil des Aufnahmemoduls sein.

Idealerweise ist die Drehachse während der Dichtebestimmung derart vertikal zum Aufnahmemodul beabstandet, dass in der ersten Betriebsposition die Drehachse oberhalb des Aufnahmemoduls angeordnet ist und in der zweiten Betriebsposition die Drehachse unterhalb des Aufnahmemoduls angeordnet ist. Durch diese Anordnung dringt das Aufnahmemodul in der ersten Betriebsposition tiefer in das umgebende Fluid ein als in der zweiten Betriebsposition. Dies hat den Vorteil, dass bei der zweiten Betriebsposition, die für die Dichtebestimmung von schwimmenden Festkörpern verwendet wird, im Fluid unterhalb des Aufnahmemoduls mehr Raum für den Festkörper zur Verfügung steht. Bei der ersten Betriebsposition, die für die Dichtebestimmung von sinkenden Festkörpern verwendet wird, steht hingegen im Fluid oberhalb des Aufnahmemoduls mehr Raum für den Festkörper zur Verfügung. Durch die Wahl eines geeigneten Abstands der Drehachse vom Aufnahmemodul wird automatisch bei der ersten und zweiten Bebtriebsposition die richtige Eindringtiefe des Aufnahmemoduls in das umgebende Fluid sicher gestellt. Dadurch kann auf ein zusätzliches Höhenverstellmodul verzichtet werden.

Vorteilhafterweise weist die Lastaufnahmevorrichtung mindestens ein Feststellelement auf, mit dem das Aufnahmemodul in mindestens einer der beiden Betriebspositionen lösbar fixiert werden kann. Dies bietet den Vorteil, dass der Festkörper in einer klar definierten Position gehalten werden kann. Das Einbringen des Festkörpers in das Fluid ist einfacher wenn das Aufnahmemodul nicht beweglich ist.

Weist das Feststellelement Mittel zur definierten Einnahme der Betriebsposition auf, so ist es für den Benutzer einfacher zu der jeweilige Betriebsposition zu wechseln.

Mögliche Mittel zur definierten Einnahme der Betriebsposition können eine zusammenwirkende Nut und Feder sein. Die Feder kann dabei ein Teil des Hängemoduls sein und die Nut ein Teil des Aufnahmemoduls. Es ist jedoch auch denkbar, dass die Feder ein Teil des Aufnahmemoduls und die Nut ein Teil des Hängemoduls ist. Es ist auch möglich, dass sowohl das Hängemodul als auch das Aufnahmemodul eine Feder aufweisen. Es ist auch denkbar, dass in die Feder eine Nut eingearbeitet ist, die mit einem Teil des Aufnahmemoduls oder des Hängemoduls zusammenwirkt.

In einer möglichen Ausführungsform weist das Hängemodul zwei Stangen zum Befestigen des Aufnahmemoduls auf und das Aufnahmemodul weist mindestens eine Nut auf. Dabei ist mindestens eine der Stangen zu einer Feder gebogen, die mit einer Nut des Aufnahmemoduls zusammenwirkt. Die Verbindung ist besonders stabil, wenn beide Stangen zu jeweils einer Feder gebogen sind und jede Feder mit jeweils einer Nut des Aufnahmemoduls zusammenwirkt.

Das Aufnahmemodul kann eine Lasche mit einer Aussparung aufweisen, wobei die Aussparung die Nut des Feststellelements bildet.

Alternativ kann das Aufnahmemodul eine Lasche mit zwei abgebogenen Bereichen aufweisen, wobei durch die abgebogenen Bereiche die Nut des Feststellelements gebildet wird. Der abgebogene Bereich wird dabei von einer Aussenkante und einer Falzkante begrenzt. Die Falzkante grenzt an die Nut an.

Idealerweise ist das Feststellelement selbstzentrierend. Dies kann durch aufeinander zu laufende Falzkanten und runde Aussenkanten realisiert werden. Die Aussenkante ist dabei derart ausgestaltet, dass eine Stange über die runde Aussenkante in die Nut geführt werden kann. Dadurch kann die Stange eine klar definierte Position einnehmen.

In einer alternativen Ausführungsform weist das Aufnahmemodul ein reversibel verformbares Material auf. Dabei ist das Aufnahmemodul derart verformbar, dass durch eine gerichtete Krafteinwirkung auf das Aufnahmemodul reversibel zwischen der ersten und der zweiten Betriebsposition gewechselt werden kann. Das verformbare Material ist ein federelastisches Material das den Wechsel zwischen den beiden Betriebspositionen wie bei einem sogenannten Knackfrosch ermöglicht. Diese Ausführungsform hat den Vorteil, dass keine bewegliche Verbindung zwischen dem Aufnahmemodul und dem Hängemodul notwendig ist. Aufnahmemodul und Hängemodul können unbeweglich miteinander verbunden sein. Bei dieser Ausführungsform ändert sich die Eindringtiefe des Aufnahmemoduls nicht automatisch beim Wechsel zwischen erster und zweiter Betriebsposition. Es ist deshalb in der Regel ein zusätzliches Höhenverstellelement notwendig.

Um verfälschende Luftansammlungen zu verhindern, weist das Aufnahmemodul idealerweise Öffnungen auf durch die Luft hindurchströmen kann.

Beim umgebenden Fluid handelt es sich in der Regel um eine Flüssigkeit. Meistens kommt destilliertes Wasser oder Ethanol zum Einsatz.

Die erfindungsgemässe Lastaufnahmevorrichtung wird anhand von Ausführungsformen, wie sie schematisch in den Zeichnungen dargestellt sind, im Folgenden beschrieben. Es zeigen
- Figur 1: a) Front-, b) Seiten- und c) perspektivische Ansicht einer Lastaufnahmevorrichtung für sinkende Festkörper nach dem Stand der Technik;
- Figur 2: a) Front-, b) Seiten- und c) perspektivische Ansicht einer Lastaufnahmevorrichtung für schwimmende Festkörper nach dem Stand der Technik;
- Figur 3: a) Front- und b) Seitenansicht einer ersten Ausführungsform der erfindungsgemässen Lastaufnahmevorrichtung mit einem drehbar gelagerten Aufnahmemodul in der ersten Betriebsposition;
- Figur 4: perspektivische Ansicht von jeweils einem Ausschnitt der ersten Ausführungsform der erfindungsgemässen Lastaufnahmevorrichtung in der a) ersten und b) zweiten Betriebsposition;
- Figur 5: a) Front- und b) Seitenansicht einer zweiten Ausführungsform der erfindungsgemässen Lastaufnahmevorrichtung in der ersten Betriebsposition;
- Figur 6: perspektivische Ansicht von jeweils einem Ausschnitt der zweiten Ausführungsform der erfindungsgemässen Lastaufnahmevorrichtung in der a) ersten und b) zweiten Betriebsposition;
- Figur 7: a) Front- und b) Seitenansicht einer dritten Ausführungsform der erfindungsgemässen Lastaufnahmevorrichtung in der ersten Betriebsposition;
- Figur 8: perspektivische Ansicht der dritten Ausführungsform der erfindungsgemässen Lastaufnahmevorrichtung in der a) ersten und b) zweiten Betriebsposition;
- Figur 9: a) Front- und b) Seitenansicht einer vierten Ausführungsform der erfindungsgemässen Lastaufnahmevorrichtung in der ersten Betriebsposition;
- Figur 10: perspektivische Ansicht der vierten Ausführungsform der erfindungsgemässen Lastaufnahmevorrichtung in der a) ersten und b) zweiten Betriebsposition;
- Figur 11: a) Front- und b) Seitenansicht einer fünften Ausführungsform der erfindungsgemässen Lastaufnahmevorrichtung in der ersten Betriebsposition;
- Figur 12: perspektivische Ansicht der fünften Ausführungsform der erfindungsgemässen Lastaufnahmevorrichtung in der a) ersten und b) zweiten Betriebsposition;
- Figur 13: Seitenansicht einer Waage mit der ersten Ausführungsform der erfindungsgemässen Lastaufnahmevorrichtung in der ersten Betriebsposition für die Dichtebestimmung von sinkenden Festkörpern und
- Figur 14: Seitenansicht einer Waage mit der ersten Ausführungsform der erfindungsgemässen Lastaufnahmevorrichtung in der zweiten Betriebsposition für die Dichtebestimmung von schwimmenden Festkörpern.

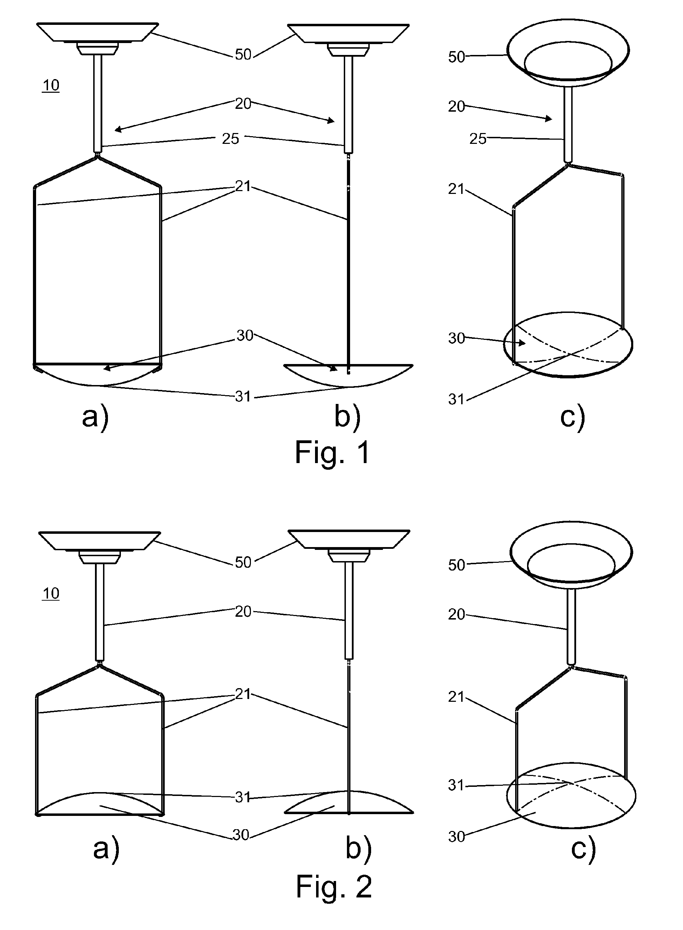

Figur 1 zeigt eine a) Front-, b) Seiten- und c) perspektivische Ansicht einer Lastaufnahmevorrichtung 10 für sinkende Festkörper nach dem Stand der Technik. Die Lastaufnahmevorrichtung 10 weist ein Aufnahmemodul 30 auf. Das Aufnahmemodul 30 besteht im Wesentlichen aus einer runden Fläche, welche eine Vertiefung 31 aufweist. Das Aufnahmemodul 30 weist einen kreisförmigen Rand auf. Die Vertiefung 31 ist in Schwerkraftrichtung ausgerichtet und dient der Aufnahme von mindestens einem sinkenden Festkörper, der während der Dichtebestimmung in einer umgebenden Flüssigkeit gehalten wird. Der Festkörper sinkt in der umgebenden Flüssigkeit, falls die Dichte des Festkörpers grösser als die Dichte der umgebenden Flüssigkeit ist. Das Aufnahmemodul 30 ist mit einem Hängemodul 20 verbunden, welches der hängenden Verbindung mit einem mit der Wägezelle einer Waage verbundenen Teil dient. Das Hängemodul 20 weist zwei Stangen 21 auf. Jede Stange 21 ist an einem Ende mit jeweils einem Randpunkt des Aufnahmemoduls 30 starr verbunden. Die beiden Kontaktpunkte des Hängemoduls 20 mit dem Aufnahmemodul 30 sind diametral gegenüberliegend auf dem kreisförmigen Rand des Aufnahmemoduls 30 angeordnet. Die beiden Stangen 21 sind gleich lang. Die Länge der Stangen 21 ist dabei so gewählt, dass bei der Dichtebestimmung ein auf dem Aufnahmemodul 30 liegender Festkörper vollkommen von Flüssigkeit umgeben ist. Die beiden Enden der Stangen 21, die nicht mit dem Aufnahmemodul 30 verbunden sind, werden durch eine Hülse 25 zusammengefasst. Sowohl die Stangen 21 als auch die Hülse 25 sind während der Dichtebestimmung vertikal ausgerichtet. Die Hülse 25 ist mit einem weiteren Aufnahmemodul 50 zur Messung ausserhalb der Flüssigkeit verbunden. Das Aufnahmemodul 50 zur Messung ausserhalb der Flüssigkeit ist im Wesentlichen eine Schale, die der Aufnahme von mindestens einem Festkörper dient. Das Aufnahmemodul 50 kann an einen mit der Wägezelle einer Waage verbundenen Ständer mit einem horizontal ausgerichteten Arm gehängt werden. Dabei kann die Unterseite der Schale auf dem Arm des Ständers aufliegen.

Figur 2 zeigt a) Front-, b) Seiten- und c) perspektivische Ansicht einer weiteren Lastaufnahmevorrichtung 10 für schwimmende Festkörper nach dem Stand der Technik. Im Wesentlichen weist die Lastaufnahmevorrichtung 10 für sinkende Festkörper aus Figur 1 die gleichen Merkmale auf. Die Unterschiede liegen in der Ausrichtung der Vertiefung 31 des Aufnahmemoduls 30 und in der Länge der Stangen 21 des Hängemoduls 20. Die Vertiefung 31 ist in Auftriebsrichtung ausgerichtet. Bei dieser Anordnung kann ein schwimmender Festkörper unter dem Aufnahmemodul 300 platziert werden. Durch die auf den Festkörper wirkende Auftriebskraft wird der Festkörper gegen die Vertiefung 31 gedrückt und so im umgebenden Fluid gehalten. Um dem Festkörper genügend Raum im umgebenden Fluid zu geben, müssen die Stangen 21 kürzer sein als bei der Lastaufnahmevorrichtung für sinkende Festkörper.

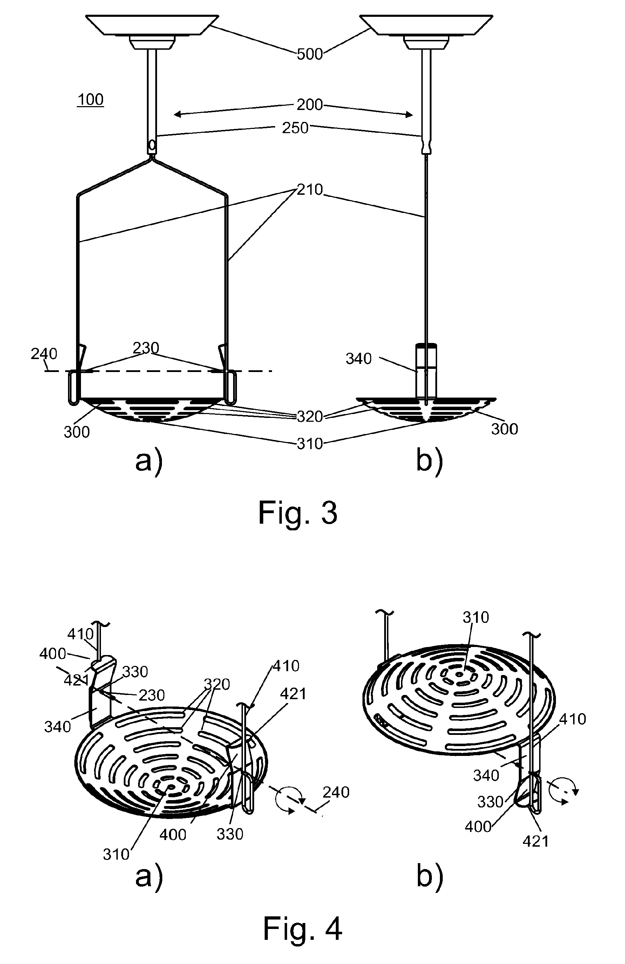

Figur 3 zeigt eine a) Front- und b) Seitenansicht einer ersten Ausführungsform der erfindungsgemässen Lastaufnahmevorrichtung 100 mit einem drehbar gelagerten Aufnahmemodul 300 in der ersten Betriebsposition. Diese Lastaufnahmevorrichtung 100 weist im Wesentlichen die gleichen Teile wie die in Figur 1 und 2 dargestellten Lastaufnahmevorrichtungen 100 nach dem Stand der Technik auf. Der wesentliche Unterschied zur Lastaufnahmevorrichtung 100 nach dem Stand der Technik liegt in der Verbindung zwischen dem Hängemodul 200 und dem Lastaufnahmemodul 300. Das Lastaufnahmemodul 300 ist drehbar um eine Drehachse 240 gelagert. Die Drehachse 240 ist in beiden Betriebspositionen während der Dichtebestimmung horizontal ausgerichtet. In der ersten Betriebsposition zur Dichtebestimmung eines sinkenden Festkörpers 900 befindet sich die Drehachse 240 oberhalb des Aufnahmemoduls 300. An zwei diametral gegenüberliegenden Punkten des Randes des Aufnahmemoduls 300 sind zwei Laschen 340 befestigt. Die Verbindung zwischen dem Aufnahmemodul 300 und den Laschen 340 ist starr. Die beiden Laschen 340 sind während der Dichtebestimmung mehrheitlich vertikal ausgerichtet. Die Laschen 340 weisen eine längliche Form mit zwei Enden auf. Das erste Ende ist jeweils mit dem Aufnahmemodul 300 verbunden. Die Lasche 340 ist derart geformt, dass sich das zweite Ende der Lasche 340 in horizontaler Richtung erstreckt. Der Rand des zweiten Endes weist eine Aussparung 421 auf, die der Aufnahme einer Stange 210 des Hängemoduls 200 dient. Die Aussparung 421 ist so angeordnet, dass das Aufnahmemodul 300 in der ersten oder zweiten Betriebsposition fixiert werden kann. Des Weiteren weist jede Lasche 340 ein durch eine Bohrung gebildetes Lager 330 auf. Das Lager 330 dient der Aufnahme eines Endes einer Stange 210 des Hängemoduls 200. Damit das Lager 330 das Ende der Stange 210 aufnehmen kann, muss das mit dem Aufnahmemodul 300 verbundenen Ende der Stange 210 derart gebogen sein, so dass es in Betriebsposition horizontal ausgerichtet ist und in das Lager 330 eingeführt werden kann. Die beiden Enden der Stangen 210 definieren die Drehachse 240 um die das Aufnahmemodul 300 drehbar gelagert ist.

Die Stangen 210 des Hängemoduls 200 sind zu jeweils einer Feder 410 gebogen, wodurch die erzeugte Federspannung jeweils eine Stange 210 in die zu ihr korrespondierende Aussparung 421 gedrückt wird. Auf diese Weise wird das Aufnahmemodul 300 zusätzlich in der ersten bzw. zweiten Betriebsposition fixiert.

Sind Luftblasen während der Dichtebestimmung unabsichtlich eingeschlossen, so haben sie einen verfälschen Einfluss auf das Messergebnis. Aus diesem Grund weist das Aufnahmemodul 300 Öffnungen 320 auf, die dem Einschluss von Luftblasen während der Dichtebestimmung entgegenwirken.

Figur 4 zeigt eine isometrische Ansicht von jeweils einem Ausschnitt der ersten Ausführungsform der erfindungsgemässen Lastaufnahmevorrichtung 100 in der ersten und zweiten Betriebsposition. Die Stifte 230 des Hängemoduls 200, die die Drehachse 240 bilden, sind in der ersten Betriebsposition oberhalb des Aufnahmemoduls 300 angeordnet. Wird das Aufnahmemodul 300 ausgehend von der ersten Betriebsposition um 180° um die Drehachse 240 gedreht, so wird die zweite Betriebsposition eingenommen und die Drehachse 240 befindet sich unterhalb der Aufnahmemoduls 100.

Durch die beschriebene Anordnung der Drehachse 240 wird automatisch beim Wechsel der Betriebspositionen die Eindringtiefe des Aufnahmemoduls 300 in der umgebende Flüssigkeit 1000 variiert. Bei der ersten Betriebsposition, bei der der Festkörper 900 auf dem Aufnahmemodul 300 aufliegt, dringt das Aufnahmemodul 300 tiefer ein als bei der zweiten Betriebsposition, bei der der Festkörper 900 von unter gegen das Aufnahmemodul 300 drückt. Durch die Variation der Eindringtiefe ergibt sich in der ersten Betriebsposition oberhalb des Aufnahmemoduls 300 und in der zweiten Betriebsposition unterhalb des Aufnahmemoduls 300 genügend Raum für den Festkörper 900.

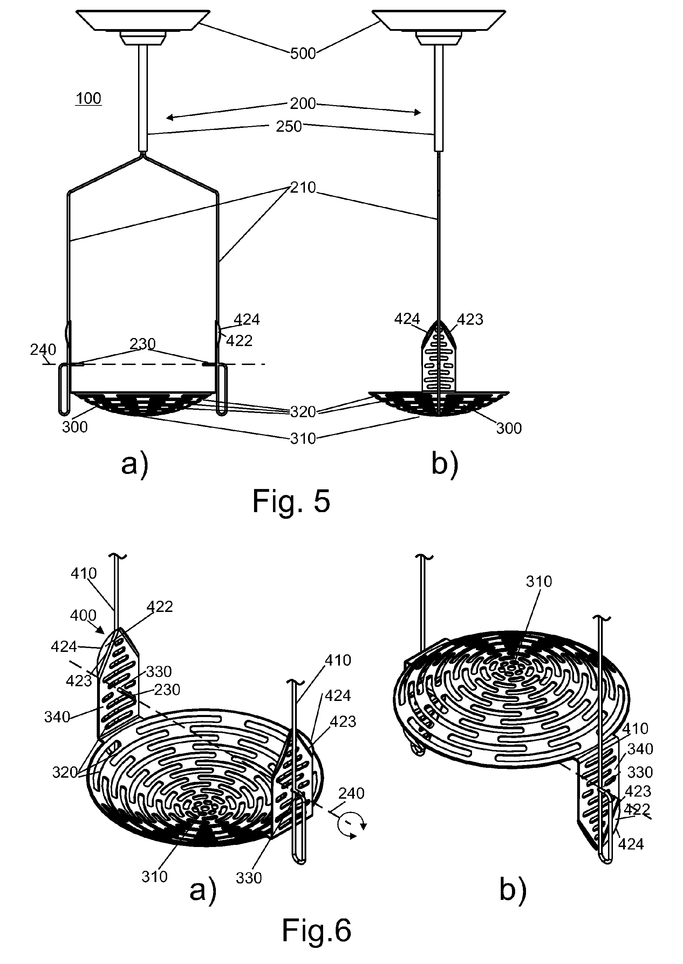

Figur 5 zeigt eine Front- und eine Seitenansicht einer zweiten Ausführungsform der erfindungsgemässen Lastaufnahmevorrichtung 100 in der ersten Betriebsposition. Figur 6 zeigt eine isometrische Ansicht von jeweils einem Ausschnitt der zweiten Ausführungsform der erfindungsgemässen Lastaufnahmevorrichtung 100 in der ersten und zweiten Betriebsposition.

Der wesentliche Unterschied zur in Figur 3 und 4 dargestellten ersten Ausführungsform liegt in der Ausgestaltung der Laschen 340. Die Laschen 340 sind während der Dichtebestimmung mehrheitlich vertikal ausgerichtet. Das erste Ende der Lasche 340 ist jeweils mit dem Aufnahmemodul 300 verbunden. Das zweite Ende weist eine Nut zur Aufnahme einer Stange 210 des Hängemoduls 200 auf. Die Nut wird durch einen ersten und einen zweiten abgebogenen Bereich 422 der Lasche 340 gebildet. Der abgebogene Bereich 422 wurde durch Falzen der Lasche 340 an der ersten und zweiten Falzkante 423 erzeugt. Die beiden Falzkanten 423 laufen zum zweiten Ende der Lasche v-förmig aufeinander zu. Die beiden Falzkanten 423 berühren sich jedoch nicht und bieten zwischen ihnen genügend Platz um eine Stange 210 des Hängemoduls 200 aufzunehmen. Sowohl der erste als auch der zweite abgebogene Bereich 422 weist eine runde Aussenkante 424 auf. Entlang dieser runden Kante 424 kann beim Positionswechsel eine Stange 210 des Hängemoduls 200 geführt werden. Da die Stangen 210 genau wie bei der ersten Ausführungsform zu Federn 410 gebogen sind, stehen die Stangen 210 unter Spannung und werden gegen die Lasche 340 gedrückt. Beim Positionswechsel wird die Stange 210 des Hängemoduls 200 über die runde Kante 424 geführt bis sich die Stange 210 in der Nut befindet. Da die Stange 210 auf Grund der Feder 410 unter Spannung steht, rastet die Stange 210 in der Nut ein.

Die Lasche 340 der zweiten Ausführungsform ist im Vergleich zu der Lasche 340 der ersten Ausführungsform grossflächiger. Diese grössere Fläche birgt eine grössere Gefahr von verfälschenden Lufteinschlüssen. Dieses Problem wird durch Öffnungen 320 in der Lasche 340 vermindert.

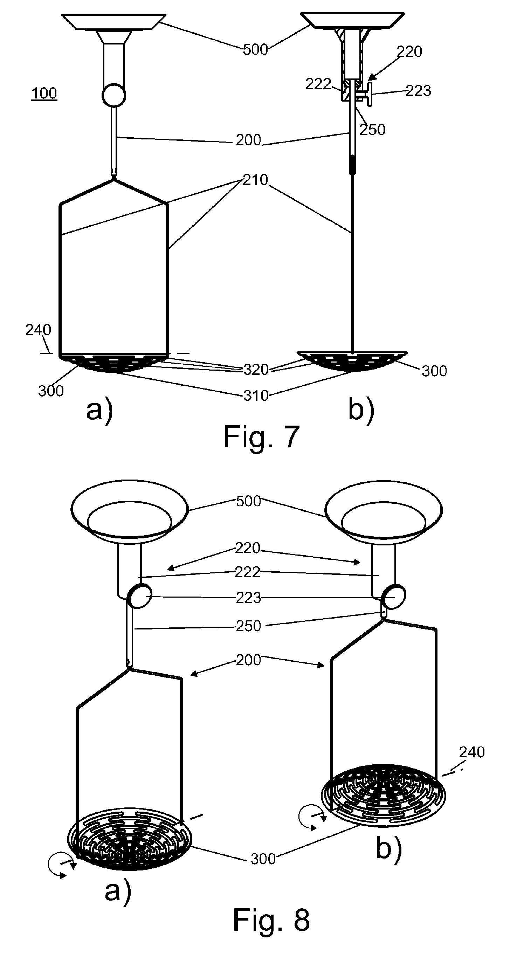

Figur 7 zeigt eine Front und eine Seitenansicht einer dritten Ausführungsform der erfindungsgemässen Lastaufnahmevorrichtung 100 in der ersten Betriebsposition. Figur 8 zeigt eine isometrische Ansicht der dritten Ausführungsform der erfindungsgemässen Lastaufnahmevorrichtung 100 in der ersten und zweiten Betriebsposition. Im Unterschied zur ersten und zweiten Ausführungsform befindet sich bei dieser dritten Ausführungsform die Drehachse 240 in der gleichen horizontalen Ebene wie der Rand des Aufnahmemoduls 300. Anders als bei der ersten und zweiten Ausführungsform verändert sich dadurch die Eindringtiefe des Aufnahmemoduls 300 nicht in Abhängigkeit von der Betriebsposition. D.h. die Eindringtiefe des Rands des Aufnahmemoduls wird für die erste und zweite Betriebsposition beibehalten. Wie bereits beschrieben wurde, ist es jedoch vorteilhaft wenn das Aufnahmemodul 300 bei der ersten Betriebsposition tiefer in das umgebende Fluid 1000 eintaucht als in der zweiten Betriebsposition. Aus diesem Grund weist das Hängemodul 200 ein Höhenverstellelement 220 auf mit dem die Eindringtiefe des Aufnahmemoduls 300 in das umgebende Fluid 1000 reguliert werden kann. Für das Höhenverstellelement 220 werden die beiden Stangen 210 des Hängemoduls 200 durch eine in Betriebsposition vertikal ausgerichtete Hülse 250 zusammengefasst. Diese Hülse 250 ist in einer Buchse 222 eingeführt, wobei die Hülse 250 in der Buchse 222 in Betriebsposition vertikal verschiebbar ist. Auf diese Weise kann die Eindringtiefe des Aufnahmemoduls 300 in dem Fluid 1000 reguliert werden. Die Hülse 250 ist mit einem Aufnahmemodul zur Trockenmessung 500 verbunden. Mit Hilfe einer Feststellschraube 223 kann die Buchse 222 an einer geeigneten Position in der Hülse 250 fixiert werden.

Des Weiteren weist die hier gezeigte dritte Ausführungsform kein Feststellelement auf mit dem das Aufnahmemodul 300 in der ersten oder zweiten Betriebsposition fixiert werden kann. Durch die auf den Festkörper 900 wirkende Auftriebs- bzw. Schwerkraft wird das Aufnahmemodul 300 jedoch trotzdem in der jeweils korrekten Position gehalten.

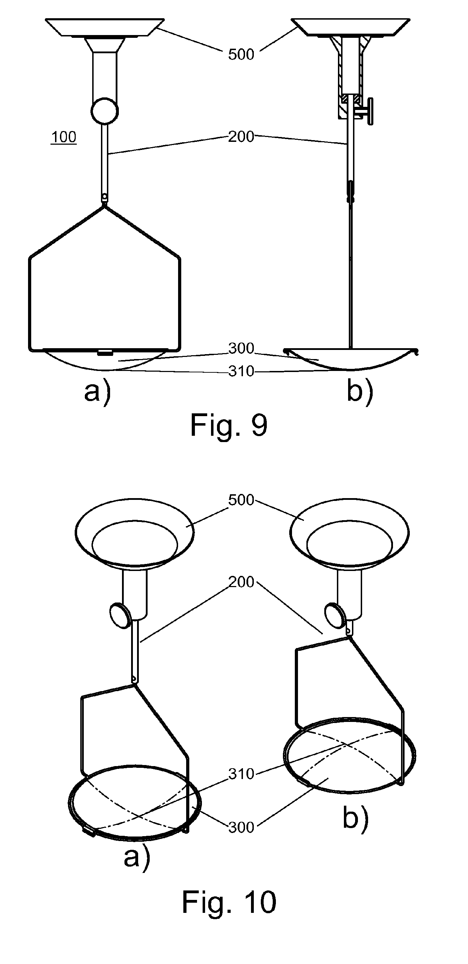

Figur 9 zeigt eine Front- und eine Seitenansicht einer vierten Ausführungsform der erfindungsgemässen Lastaufnahmevorrichtung 100 in der ersten Betriebsposition. Figur 10 zeigt eine isometrische Ansicht der vierten Ausführungsform der erfindungsgemässen Lastaufnahmevorrichtung 100 in der ersten und zweiten Betriebsposition. Bei dieser Ausführungsform sind das Hängemodul 200 und das Aufnahmemodul 300 nicht beweglich miteinander verbunden. Die Richtungsänderung der Vertiefung 310 wird durch ein reversibel verformbares Material des Aufnahmemoduls 300 erreicht. Durch eine gerichtete Krafteinwirkung auf das Aufnahmemodul 300 kann zwischen der ersten und der zweiten Betriebsposition gewechselt werden. Der dabei entstehende Effekt ist ähnlich dem eines Knackfrosches. Bei dieser Ausführungsform wird die Eindringtiefe des Aufnahmemoduls 300 in das umgebende Fluid 1000 mit Hilfe eines Höhenverstellelements 220 reguliert.

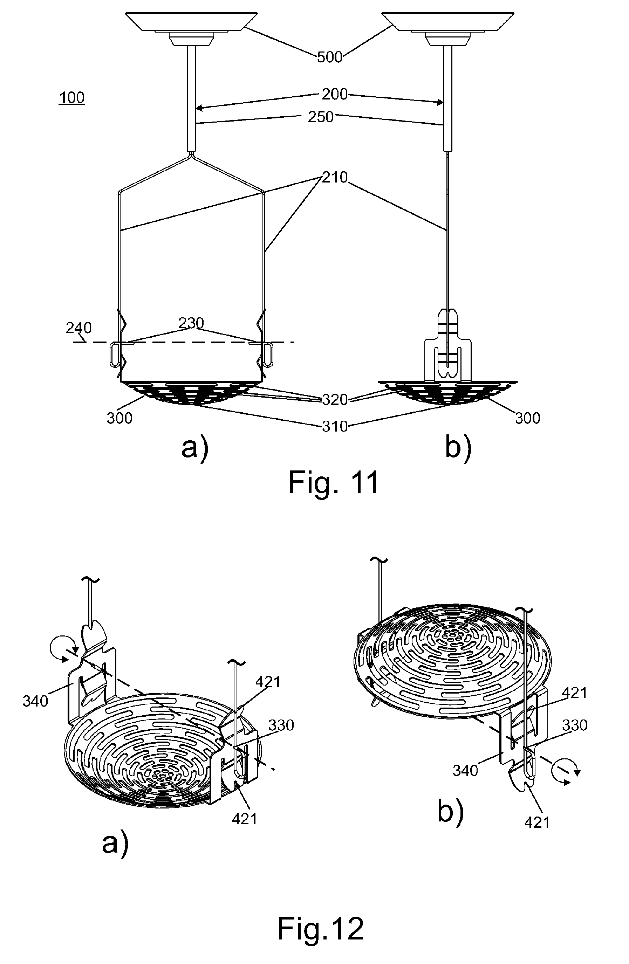

Figur 11 zeigt eine Front- und eine Seitenansicht einer fünften Ausführungsform der erfindungsgemässen Lastaufnahmevorrichtung 100 in der ersten Betriebsposition. Figur 12 zeigt eine isometrische Ansicht der fünften Ausführungsform der erfindungsgemässen Lastaufnahmevorrichtung 100 in der ersten und zweiten Betriebsposition. Diese fünfte Ausführungsform unterscheidet sich von der in Figur 3 und 4 dargestellten ersten Ausführungsform im Wesentlichen durch die Ausgestaltung der Laschen 340. Die Lasche 340 weist zwei Nuten 421 auf. Die erste Nut dient der Aufnahme einer Stange 210 des Hängemoduls 200 in der ersten Betriebsposition. Die zweite Nut dient der Aufnahme der Stange des Hängemoduls 200 in der zweiten Betriebsposition. Die Drehachse 240 befindet sich zwischen der ersten und zweiten Nut. Idealerweise weisen die erste und die zweite Nut den gleichen Abstand zur Drehachse 240 auf. Auf diese Weise wird die Stange 210 sowohl in der ersten als auch der zweiten Betriebsposition durch die Federkraft an der gleichen Stelle in die korrespondierende Nut gedrückt. In Folge dessen ist die auf die auf die Nut wirkende Federkraft in der ersten und der zweiten Betriebsposition gleich gross. Diese Ausführungsform weist gegenüber der ersten Ausführungsform folgenden Vorteil auf: Bei der ersten und zweiten Position wirkt die Nut 421 mit einer anderen Stelle der Stange 210 zusammen. In Folge dessen ist die auf die Nut 421 wirkende Federkraft unterschiedlich gross. Insbesondere ist die auf die Nut 421 wirkende Federkraft in der zweiten Betriebsposition kleiner als in der ersten Betriebsposition, wodurch die Fixierung des Aufnahmemoduls 300 in der zweiten Betriebsposition weniger stabil als in der ersten Betriebsposition ist.

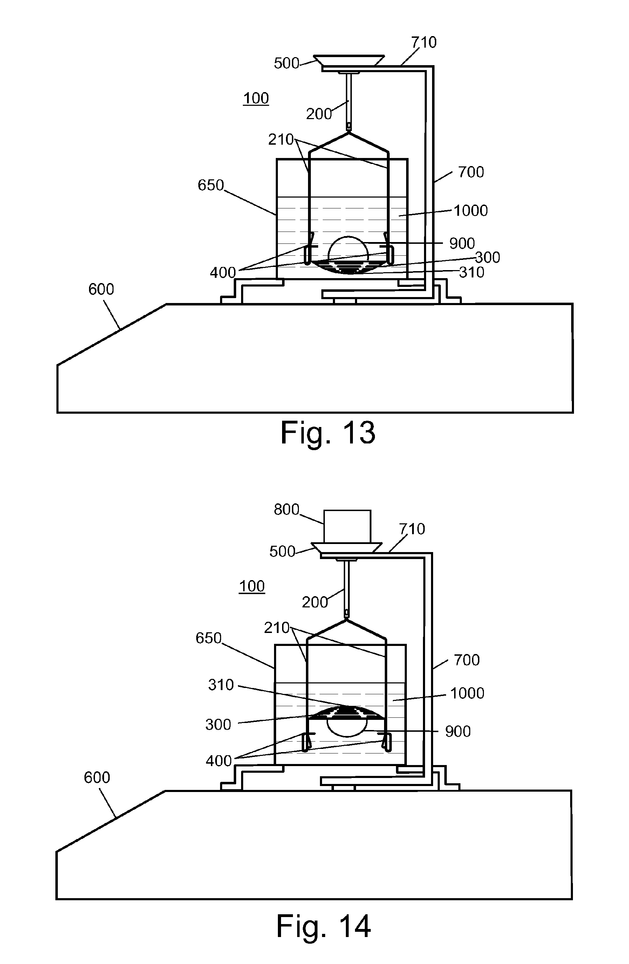

Figur 13 zeigt eine Seitenansicht einer Waage 600 mit der ersten Ausführungsform der erfindungsgemässen Lastaufnahmevorrichtung 100 in der ersten Betriebsposition für die Dichtebestimmung von sinkenden Festkörpern 900. Auf der Waage 600, jedoch von der Wägezelle entkoppelt, befindet sich ein Behälter 650, der ein Fluid 1000 enthält. Das Fluid 1000 ist vorzugsweise eine Flüssigkeit, wie zum Beispiel destilliertes Wasser oder Ethanol. An der Wägezelle der Waage 600 ist ein Ständer 700 angebracht, der einen mehrheitlich horizontal ausgerichteten Arm 710 aufweist. Der Arm 710 befindet sich oberhalb der Waage 600 und des Behälters 650. Am Arm 710 des Ständers 700 kann die Lastaufnahmevorrichtung 100 befestigt werden. Idealerweise kann das Hängemodul 200 der Lastaufnahmevorrichtung 100 an den Arm 710 gehängt werden. Die Lastaufnahmevorrichtung 100 weist ein Aufnahmemodul 300 mit einer Vertiefung 310 auf, in der ein im Fluid 1000 sinkender Festkörper 900 liegt. Auf diese Weise wird der sinkende Festkörper 900 in dem Fluid 1000 gehalten.

Figur 14 zeigt eine Seitenansicht einer Waage 600 mit der erfindungsgemässen Lastaufnahmevorrichtung 100 aus Figur 11 in der zweiten Betriebsposition für die Dichtebestimmung von schwimmenden Festkörpern 900. Die Dichte des Festkörpers 900 ist kleiner als die Dichte der umgebenden Flüssigkeit 1000, wodurch der Festkörper 900 Auftrieb erfährt und auf Grund der auf ihn wirkenden Auftriebskraft in die Vertiefung 310 des Aufnahmemoduls 300 gedrückt wird. Auf diese Weise wird der schwimmende Festkörper 900 in dem Fluid 1000 gehalten.

Um zu verhindern dass die Lastaufnahmevorrichtung 1000 auf Grund der auf den schwimmenden Festkörper 900 wirkenden Auftriebskraft nach oben gedrückt wird, wird in das Aufnahmemodul zur Trockenmessung 500 ein zusätzliches Gewicht 800 gelegt.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Bezugszeichenliste

- 10, 100: Lastaufnahmevorrichtung
- 20,200: Hängemodul
- 21,210: Stange
- 220: Höhenverstellelement
- 222: Buchse
- 223: Feststellschraube
- 230: Stift
- 240: Drehachse
- 25, 250: Hülse
- 30, 300: Aufnahmemodul zur Messung innerhalb der Flüssigkeit
- 31,310: Vertiefung
- 320: Öffnungen
- 330: Lager
- 340: Lasche
- 400: Feststellelement
- 410: Feder
- 421: Aussparung
- 422: Abgebogener Bereich
- 423: Falzkante
- 424: Runde Kante
- 50, 500: Aufnahmemodul zur Messung ausserhalb der Flüssigkeit
- 600: Waage
- 650: Behälter
- 700: Ständer
- 710: Arm
- 800: Gewicht
- 900: Festkörper
- 1000: Umgebende Flüssigkeit

## Patentansprüche

1. Lastaufnahmevorrichtung (100) für die Aufnahme von mindestens einem Festkörper (900), der während einer Dichtebestimmung in einem umgebenden Fluid (1000) gehalten werden kann, wobei die Lastaufnahmevorrichtung (100) ein Hängemodul (200) zur hängenden Verbindung mit einem mit der Wägezelle einer Waage (600) verbundenen Teil (700) und ein mit dem Hängemodul (200) verbundenen Aufnahmemodul (300) zur Aufnahme des Festkörpers (900) aufweist, **dadurch gekennzeichnet, dass**
das Aufnahmemodul (300) eine Vertiefung (310) zur Aufnahme des Festkörpers (1000) aufweist und die Ausrichtung dieser Vertiefung (310) derart einstellbar ist, dass in einer ersten Betriebsposition ein in dem Fluid (1000) sinkender Festkörper (900) durch die auf ihn wirkende Schwerkraft in der Vertiefung (310) aufliegen kann und in einer zweiten Betriebsposition ein in dem Fluid (1000) schwimmender Festkörper (900) durch die auf ihn wirkende Auftriebskraft mittels der Vertiefung (310) in dem umgebenden Fluid (1000) gehalten werden kann.

2. Lastaufnahmevorrichtung (100) nach Anspruch 1, **dadurch gekennzeichnet, dass** das Aufnahmemodul (300) drehbar um eine senkrecht zur Schwerkraftrichtung ausgerichteten Drehachse (240) gelagert ist und durch Rotation des Aufnahmemoduls (300) um die Drehachse (240) zwischen der ersten und zweiten Betriebsposition wechselbar ist.

3. Lastaufnahmevorrichtung (100) nach Anspruch 2, **dadurch gekennzeichnet, dass** die Drehachse (240) durch das Aufnahmemodul (300) verläuft.

4. Lastaufnahmevorrichtung (100) nach einem der vorangehenden Ansprüche, **dadurch gekennzeichnet, dass** mit einem Höhenverstellelement (220) die Eindringtiefe des Aufnahmemoduls (300) im umgebenden Fluid (1000) variierbar ist.

5. Lastaufnahmevorrichtung (100) nach Anspruch 4, **dadurch gekennzeichnet, dass** das Höhenverstellelement (220) ein Teil des Hängemoduls (200) ist.

6. Lastaufnahmevorrichtung (100) nach Anspruch 2 bis 5, **dadurch gekennzeichnet, dass** die Drehachse (240) derart vertikal zum Aufnahmemodul (300) beabstandet ist, dass in der ersten Betriebsposition die Drehachse (240) oberhalb des Aufnahmemoduls (300) angeordnet ist und in der zweiten Betriebsposition die Drehachse (240) unterhalb des Aufnahmemoduls (300) angeordnet ist.

7. Lastaufnahmevorrichtung (100) nach einem der Ansprüche 2 bis 6, **dadurch gekennzeichnet, dass** die Lastaufnahmevorrichtung (100) mindestens ein Feststellelement (400) aufweist, mit dem das Aufnahmemodul (300) in mindestens einer der beiden Betriebspositionen lösbar fixierbar ist.

8. Lastaufnahmevorrichtung (100) nach Anspruch 7, **dadurch gekennzeichnet, dass** das Feststellelement (400) eine mit mindestens einer Nut (421, 422) zusammenwirkende Feder (410) aufweist.

9. Lastaufnahmevorrichtung (100) nach Anspruch 8, **dadurch gekennzeichnet, dass** die Feder (410) ein Teil des Hängemoduls (200) und die mindestens eine Nut (421, 422) ein Teil des Aufnahmemoduls (300) ist.

10. Lastaufnahmevorrichtung (100) nach Anspruch 9, **dadurch gekennzeichnet, dass** das Hängemodul (200) zwei Stangen (210) zum Befestigen des Aufnahmemoduls (300) aufweist, wobei mindestens eine der Stangen (210) zu einer Feder (410) gebogen ist, die mit mindestens einer Nut (421, 422) des Aufnahmemoduls zusammenwirkt.

11. Lastaufnahmevorrichtung (100) nach Anspruch 9 oder 10, **dadurch gekennzeichnet, dass** das Aufnahmemodul (300) eine Lasche (340) mit einer Aussparung (421) aufweist, wobei die Aussparung (421) eine Nut des Feststellelements (400) bildet.

12. Lastaufnahmevorrichtung (100) nach Anspruch 9, 10 oder 11, **dadurch gekennzeichnet, dass** das Aufnahmemodul (300) ein Lasche (340) mit einem abgebogenem Bereich (422) aufweist, das eine Nut des Feststellelements (400) bildet.

13. Lastaufnahmevorrichtung (100) nach einem der vorangehenden Ansprüche, **dadurch gekennzeichnet, dass** das Aufnahmemodul (300) ein reversibel verformbares Material aufweist, wodurch das Aufnahmemodul (300) durch eine gerichtete Krafteinwirkung derart verformbar derart ist, dass reversibel zwischen der ersten und der zweiten Betriebsposition gewechselt werden kann.

14. Lastaufnahmevorrichtung (100) nach einem der vorangehenden Ansprüche, **dadurch gekennzeichnet, dass** das Aufnahmemodul (300) Öffnungen (320) zur Verringerung von Luftansammlungen aufweist.

15. Waage (600) mit einer Lastaufnahmevorrichtung (100) nach einem der vorangehenden Ansprüche.
